# EUROPÄISCHE PATENTSCHRIFT

(11) **EP 1 336 236 B1**
(45) Veröffentlichungstag und Bekanntmachung des Hinweises auf die Patenterteilung: **18.08.2004**
(21) Anmeldenummer: 01997883.2
(22) Anmeldetag: 14.11.2001
(51) Int. Cl.: H02K 9/20, H02K 55/04

(54) **SUPRALEITUNGSEINRICHTUNG MIT EINEM THERMISCH AN EINE ROTIERENDE, SUPRALEITENDE WICKLUNG ANGEKOPPELTEN KALTKOPF EINER KÄLTEEINHEIT**
SUPERCONDUCTING DEVICE WITH A COOLING-UNIT COLD HEAD THERMALLY COUPLED TO A ROTATING SUPERCONDUCTIVE WINDING
DISPOSITIF SUPRACONDUCTEUR MUNI D'UNE TETE DE REFROIDISSEMENT D'UNE UNITE DE REFROIDISSEMENT, THERMIQUEMENT COUPLEE A UN ENROULEMENT SUPRACONDUCTEUR ROTATIF

(30) Priorität: 21.11.2000 DE 10057664
(43) Veröffentlichungstag der Anmeldung: 20.08.2003
(73) Patentinhaber: SIEMENS AKTIENGESELLSCHAFT, 80333 München (DE)
(72) Erfinder: STEINMEYER, Florian, 91074 Herzogenaurach (DE)
(86) Internationale Anmeldenummer: PCT/DE2001/004265
(87) Internationale Veröffentlichungsnummer: WO 2002/043224

(56) Entgegenhaltungen:
- US-A- 4 123 677
- US-A- 5 482 919
- PATENT ABSTRACTS OF JAPAN vol. 1997, no. 07, 31. Juli 1997 (1997-07-31) & JP 09 074716 A (NIKKISO CO LTD), 18. März 1997 (1997-03-18)

## Beschreibung

Die Erfindung bezieht sich auf eine Supraleitungseinrichtung mit einem um eine Rotationsachse drehbar gelagerten Rotor, der mindestens eine supraleitende Wicklung aufweist, deren Leiter in einem wärmeleitend ausgeführten Wicklungsträger angeordnet sind, und mit einer Kälteeinheit, die mindestens einen thermisch über wärmeleitende Teile an die Wicklung angekoppelten Kaltkopf aufweist. Eine entsprechende Einrichtung geht aus der US 5,482,919 A hervor.

Neben den seit langem bekannten metallischen Supraleitermaterialien wie z.B. NbTi oder Nb₃Sn, die sehr niedrige Sprungtemperaturen T_{c} besitzen und deshalb auch Niedrig(Low)-T_{c}-Supraleitermaterialien oder LTS-Materialien genannt werden, kennt man seit 1987 metalloxidische Supraleitermaterialien mit Sprungtemperaturen von über 77 K. Letztere Materialien werden auch als Hoch(High)-T_{c}-Supraleitermaterialien oder HTS-Materialien bezeichnet und ermöglichen prinzipiell eine Kühltechnik mit flüssigem Stickstoff (LN₂).

Mit Leitern unter Verwendung solcher HTS-Materialien versucht man, auch supraleitende Wicklungen zu erstellen. Es zeigt sich jedoch, dass bisher bekannte Leiter nur eine verhältnismäßig geringe Stromtragfähigkeit in Magnetfeldern mit Induktionen im Tesla-Bereich besitzen. Dies macht es vielfach erforderlich, dass die Leiter solcher Wicklungen trotz der an sich hohen Sprungtemperaturen der verwendeten Materialien dennoch auf einem unterhalb von 77 K liegenden Temperaturniveau, beispielsweise zwischen 10 und 50 K gehalten werden müssen, um so bei Feldstärken von einigen Tesla nennenswerte Ströme tragen zu können. Ein solches Temperaturniveau liegt zwar einerseits deutlich höher als 4,2 K, der Siedetemperatur des flüssigen Heliums (LHe), mit dem bekannte metallische Supraleitermaterialien wie Nb₃Sn gekühlt werden. Andererseits ist aber eine Kühlung mit LN₂ wegen der hohen Leiterverluste unwirtschaftlich. Andere verflüssigte Gase wie Wasserstoff mit einer Siedetemperatur von 20,4 K oder Neon mit einer Siedetemperatur von 27,1 K scheiden wegen ihrer Gefährlichkeit oder wegen mangelnder Verfügbarkeit aus.

Es kommen deshalb zur Kühlung von Wicklungen mit HTS-Leitern, in dem genannten Temperaturbereich bevorzugt Kälteeinheiten in Form von Kryokühlern mit geschlossenem He-Druckgaskreislauf zum Einsatz. Solche Kryokühler sind insbesondere vom Typ Gifford-McMahon oder Stirling oder sind als sogenannte Pulsröhrenkühler ausgebildet. Solche Kälteeinheiten haben zudem den Vorteil, dass die Kälteleistung quasi auf Knopfdruck zur Verfügung steht und dem Anwender die Handhabung von tiefkalten Flüssigkeiten erspart wird. Bei einer Verwendung solcher Kälteeinheiten wird eine supraleitende Einrichtung wie z.B. eine Magnetspule oder eine Transformatorwicklung nur durch Wärmeleitung zu einem Kaltkopf eines Refrigerators indirekt gekühlt (vgl. z.B. "Proc. 16^{th} Int. Cryog. Engng. Conf. (ICEC 16)", Kitakyushu, JP, 20. - 24.05.1996, Verlag Elsevier Science, 1997, Seiten 1109 bis 1129).

Eine entsprechende Kühltechnik ist auch für den aus der eingangs genannten US-A-Schrift entnehmbaren supraleitenden Rotor einer elektrischen Maschine vorgesehen. Der Rotor enthält eine rotierende Wicklung aus HTS-Leitern, die mittels einer als Stirling- oder Gifford-McMahon- oder Pulsröhrenkühler ausgelegten Kälteeinheit auf einer gewünschten Betriebstemperatur zwischen 30 und 40 K zu halten ist. Die Kälteeinheit enthält hierzu in einer speziellen Ausführungsform einen mitrotierenden, in der Schrift nicht weiter ausgeführten Kaltkopf, dessen kältere Seite thermisch an die Wicklung indirekt über wärmeleitende Elemente gekoppelt ist. Ferner enthält die Kälteeinheit der bekannten Maschine eine außerhalb ihres Rotors befindliche Kompressoreinheit, die den Kaltkopf über eine rotierende, nicht näher ausgeführte Kupplung einer entsprechenden Transfereinheit das erforderliche Arbeitsgas zuführt. Die Kupplung versorgt außerdem über zwei Schleifringe auch einen Ventiltrieb der Kälteeinheit, der in den Kaltkopf integriert ist, mit der nötigen elektrischen Energie. Dieses Konzept macht es erforderlich, dass in der Transfereinheit mindestens zwei Gasverbindungen koaxial geführt und mindestens zwei elektrische Schleifringe vorgesehen werden müssen. Zudem ist die Zugänglichkeit der mitrotierenden Teile der Kälteeinheit und insbesondere des Ventiltriebs in dem Rotor der Maschine behindert, da bei erforderlichen Wartungen das Rotorgehäuse geöffnet werden muss. Des Weiteren ist die Funktion eines herkömmlichen Ventiltriebs bei schneller Rotation, wie sie bei Synchronmotoren oder Generatoren gegeben ist, nicht gesichert.

Aus der US 4,123,677 A geht eine Supraleitungseinrichtung mit einem um eine Rotationsachse drehbar gelagerten Rotor hervor, der einen zentralen, sich in Achsrichtung erstreckenden, zylindrischen Hohlraum aufweist. In diesen Hohlraum wird über eine Kältemitteltransfereinheit ein flüssiges Kältemittel wie insbesondere LHe in ein Kältemittelbad eingeleitet, in dem sich eine supraleitende Wicklung befindet. Das Kältemittel gelangt dabei über ein mitrotierendes zentrales Rohr der Transfereinheit in das Kältemittelbad. Entstehendes Kältemittelabgas wird nach Kühlung von Rotorkörperteilen über ein zu dem zentralen Rohr der Transfereinheit konzentrisches Rohr nach außen zur Wiederverflüssigung in einer nicht näher beschriebenen Kältemitteleinheit abgeleitet.

Einzelheiten einer entsprechenden Kältemitteltransfereinheit sind in der US 3,991,588 offenbart, mit der flüssiges und gasförmiges Kältemittel wie LHe zwischen rotierenden und nicht-rotierenden Teilen zu überführen ist.

Aufgabe der vorliegenden Erfindung ist es, ausgehend von einem Stand der Technik gemäß der US 5,482,919 A die Einrichtung mit den eingangs genannten Merkmalen dahingehend auszugestalten, dass mit ihr ein sicherer und wirtschaftlicher Betrieb der Kälteeinheit sowohl im Stillstand als auch bei Rotation des Rotors in einem Temperaturbereich unter 77 K bei vergleichsweise vermindertem apparativen Aufwand zu gewährleisten ist.

Diese Aufgabe wird erfindungsgemäß mit den im Anspruch 1 angegebenen Maßnahmen gelöst. Dementsprechend umfasst die Supraleitungseinrichtung einen um eine Rotationsachse drehbar gelagerten Rotor, der mindestens eine supraleitende Wicklung aufweist, deren Leiter in einem wärmeleitend ausgeführten Wicklungsträger angeordnet sind, sowie eine Kälteeinheit, die mindestens einen thermisch über wärmeübertragende Teile an die Wicklung angekoppelten Kaltkopf aufweist. Dabei soll die Supraleitungseinrichtung folgende Merkmale aufweisen, nämlich
- dass der Wicklungsträger mit einem zentralen, sich in Achsrichtung erstreckenden, zylindrischen Hohlraum ausgestattet ist, an den ein aus dem Wicklungsträger herausführender seitlicher Hohlraum angeschlossen ist,
- dass sich der Kaltkopf feststehend außerhalb des Rotors befindet und thermisch mit einer Kondensatoreinheit zur Kondensation eines Kältemittels verbunden ist,
- dass ein feststehendes Wärmerohr an die Kondensatoreinheit gekoppelt ist, das axial in den mitrotierenden seitlichen Hohlraum hinein ragt und gegenüber diesem Raum abgedichtet ist
sowie
- dass das Wärmerohr, der seitliche Hohlraum und der zentrale Hohlraum mit dem Kältemittel gefüllt sind, wobei kondensiertes Kältemittel über das Wärmerohr in den seitlichen Hohlraum und von dort in den zentralen Hohlraum sowie dort verdampfendes Kältemittel zurück über den seitlichen Hohlraum und das Wärmerohr zu der Kondensatoreinheit gelangt.

Bei der erfindungsgemäßen Ausgestaltung der Supraleitungseinrichtung ist folglich die gesamte Kälteeinheit mit ihren eventuell beweglichen Teilen außerhalb des Rotors angeordnet und somit jederzeit leicht zugänglich. Die Bereitstellung der Kälteleistung bzw. der Wärmetransfer erfolgt von einem feststehenden Kaltkopf in den Rotor über das Wärmerohr, das ohne mechanisch bewegte Teile den Transport des Kältemittels sicherstellt. Dabei wird das Kältemittel in einem Kreisprozess an einer Kondensatoreinheit, die gut wärmeleitend mit dem Kaltkopf verbunden ist, unter Wärmeabgabe kondensiert. Anschließend rinnt das flüssige Kondensat durch das Wärmerohr in den seitlichen Hohlraum und von dort in den zentralen Hohlraum des Rotors. Der Transport des Kondensats durch das Wärmerohr geschieht unter dem Einfluss der Schwerkraft aufgrund einer sogenannten Thermosyphon-Wirkung und/oder durch die Kapillarkraft der Innenwand des Wärmerohrs. Hierzu wirkt dieses Rohr in an sich bekannter Weise als ein "Docht". Diese Funktion kann durch passende Ausgestaltung oder Auskleidung der Innenwand noch optimiert werden. Am Ende des Wärmerohrs tropft das Kondensat in den seitlichen Hohlraum. Das von diesem seitlichen Hohlraum in den zentralen, sich im Bereich der Wicklung befindlichen Hohlraum gelangte Kondensat wird dort zumindest teilweise verdampft. Das so unter Aufnahme von Wärme verdampfte Kältemittel strömt dann durch das Innere des Wärmerohres zurück in die Kondensatoreinrichtung. Der Rückstrom wird dabei getrieben durch einen leichten Überdruck in dem als Verdampferteil wirkenden zentralen Hohlraum relativ zu den als Kondensator wirkenden Teilen der Kondensatoreinheit. Dieser durch das Entstehen von Gas im Verdampfer und das Verflüssigen im Kondensator erzeugte Unterdruck führt zu dem gewünschten Kältemittelrückstrom. Entsprechende Kältemittelströmungen sind von sogenannten "Heat-Pipes" her bekannt.

Die Vorteile dieser Ausgestaltung sind unter anderem darin zu sehen, dass keine bewegten Teile wie z.B. Ventilatoren oder Pumpen zur Umwälzung des Kältemittels erforderlich sind. Ferner ist nur ein einziges, verhältnismäßig dünn auszuführendes, thermisch isoliertes Wärme(transport)rohr zur Zirkulation des Kältemittels erforderlich. Dies vermindert die Komplexität besonders an der rotierenden Dichtung, die den Gasraum des Kältemittels gegenüber dem Außenraum des Rotors abdichtet. Eine somit nur verhältnismäßig kleine Dichtung ist auf Grund der geringeren Umfangsgeschwindigkeit zuverlässiger und Wartungsärmer. Dabei beeinflussen Gasverluste des Kältemittels aus dem Innenraum in den Außenraum die Funktion des Wärmerohrs nur unwesentlich, da die Flüssigkeitsmenge in dem System nur wenig betroffen wird. Durch einen ausreichenden Vorrat sind folglich lange Standzeiten möglich. Außerdem kann die Kälteeinheit an die unterschiedlichen Anforderungen einer Maschinenaufstellung leicht angepasst werden. Insbesondere lässt sich je nach Auslegung ein viele Meter langes Wärmerohr vorsehen, so dass z.B. eine Kältemaschine zur Erleichterung ihrer Wartung an einer zugänglichen Stelle montiert sein kann, während der eigentliche Motor bzw. Generator schwer zugänglich eingebaut ist. Der Wärmetransfer bzw. die Bereitstellung der Kälteleistung ist bei der erfindungsgemäßen Ausgestaltung also besonders einfach und wirtschaftlich, insbesondere da nur eine verhältnismäßig einfache Abdichtung erforderlich ist.

Vorteilhafte Ausgestaltungen der erfindungsgemäßen Supraleitungseinrichtung gehen aus den abhängigen Ansprüchen hervor.

Vorteilhafte Ausgestaltungen der erfindungsgemäßen Supraleitungseinrichtung gehen aus den abhängigen Ansprüchen hervor.

So ist eine besonders einfache Abdichtung des Kältemittelraumes dadurch zu erreichen, dass der zentrale Hohlraum auf einer Seite durch den Wicklungsträger abgeschlossen ist und der seitliche Hohlraum an der dem Kaltkopf zugewandten Seite durch eine Dichtungseinrichtung mit mitrotierenden Teilen abgedichtet wird. Dabei kommt als Dichtungseinrichtung vorzugsweise zumindest eine Dichtung aus der Gruppe Ferrofluiddichtung, Labyrinthdichtung, Spaltdichtung in Frage.

Als Kälteeinheit lassen sich praktisch alle Typen von Kältemaschinen vorsehen, die einen auf ein vorbestimmtes Temperaturniveau zu legenden Kaltkopf aufweisen. Bevorzugt werden Kryokühler insbesondere mit geschlossenem He-Druckgaskreislauf vorgesehen, da diese einen einfachen Aufbau aufweisen und für eine indirekte Kühltechnik wie bei der erfindungsgemäßen Supraleitungseinrichtung besonders geeignet sind. Entsprechende, auch als regenerative Kryokühler bezeichnete Kühler weisen einen Regenerator bzw. regenerativen Arbeitszyklus entsprechend der üblichen Klassifikation der Kryokühler auf (vgl. z.B. den genannten Proceedings-Band, Seiten 33 bis 44).

Besonders vorteilhaft kann der Kaltkopf mehrstufig ausgebildet sein. Mit seiner ersten Stufe sind dann insbesondere Teile einer Stromzuführung oder ein thermischer Strahlungsschild auf eine vergleichsweise höhere Zwischentemperatur zu legen. Mit einem entsprechend konzipierten Kaltkopf lassen sich so auf einfache Weise feststehende Teile der Supraleitungseinrichtung jeweils auf einem für eine effektive Kühlung günstigen Temperaturniveau halten.

Außerdem ist es als vorteilhaft anzusehen, wenn die zu kühlende Wicklung und damit ihr Supraleitermaterial mittels des Kaltkopfes auf einer Temperatur unter 77 K, im Falle einer Verwendung von HTS-Material vorzugsweise zwischen 20 und 50 K zu halten ist. Bekannte HTS-Materialien weisen nämlich in diesem mit verhältnismäßig begrenztem Kühlaufwand einzuhaltenden Temperaturbereich eine für übliche Anwendungen hinreichende kritische Stromdichte auf. Die erforderliche Kälteleistung ist bei der erfindungsgemäßen Supraleitungseinrichtung ohne weiteres aufzubringen. Sie liegt z.B. im Bereich von einigen 10 W bei 20 K bis 30 K für eine Synchronmaschine der Größenklasse von etwa 1 bis 20 MW mechanischer Leistung.

Ferner ist es vorteilhaft, wenn das Wärmerohr an seinem in den seitlichen Hohlraum hinein ragenden Ende als Tropfkante ausgebildet ist. Der Eintritt des Kondensats in den seitlichen Hohlraum wird dadurch erleichtert. Desgleichen kann die Ausgestaltung auch so vorgenommen sein, dass durch die Gasbewegung im rotierenden Innenraum aufgrund des Windes des gasförmigen Teils des Kältemittels unter Rotation das Abtropfen unterstützt wird.

Darüber hinaus ist es als vorteilhaft anzusehen, wenn der seitliche Hohlraum sich in Richtung auf den mittleren Hohlraum erweitert. Dann kann nämlich zum Transport des Kältemittels eventuell noch die Schwerkraft oder Fliehkraft unterstützend ausgenutzt werden, indem der Transportweg des Kältemittels somit gegen die Rotationsachse nach außen zeigend geneigt ist.

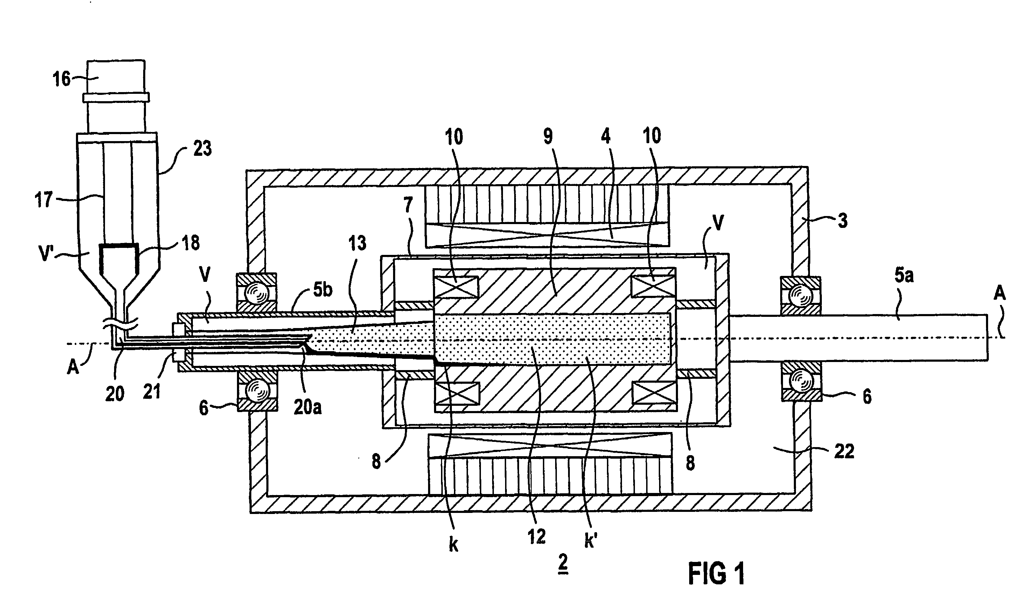

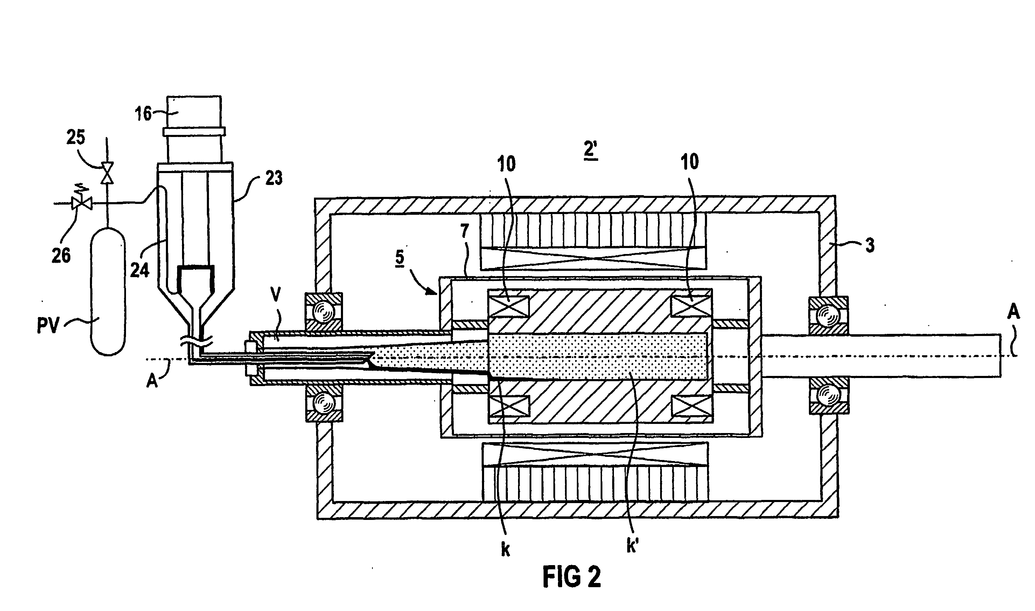

Bevorzugte Ausführungsbeispiele der Supraleitungseinrichtung nach der Erfindung werden nachfolgend an Hand der Zeichnung noch weiter erläutert. Dabei zeigen jeweils schematisch jeweils im Längsschnitt
- deren Figur 1: eine Ausführungsform einer Supraleitungseinrichtung mit Rotor und zugehörender Kälteeinheit
sowie
- deren Figur 2: eine spezielle Ausgestaltung dieser Einrichtung nach Figur 1.

Dabei sind in den Figuren sich entsprechende Teile mit denselben Bezugszeichen versehen.

Bei den nachfolgend an Hand der Figuren aufgezeigten Ausführungsformen von erfindungsgemäßen Supraleitungseinrichtungen kann es sich jeweils insbesondere um einen Synchron-Motor oder einen Generator handeln. Die Supraleitungseinrichtung umfasst eine rotierende, supraleitende Wicklung, die prinzipiell eine Verwendung von metallischem LTS-Material (Niedrig-T_{c}-Supraleitermaterial) oder oxidischem HTS-Material (Hoch-T_{c}-Supraleitermaterial) gestattet. Letzteres Material sei für die nachfolgenden Ausführungsbeispiele ausgewählt. Die Wicklung kann aus einer Spule oder aus einem System von Spulen in einer 2-, 4- oder sonstigen mehrpoligen Anordnung bestehen. Der prinzipielle Aufbau einer solchen z.B. eine Synchronmaschine bildenden Supraleitungseinrichtung geht aus Figur 1 hervor, wobei von bekannten Ausführungsformen solcher Maschinen ausgegangen wird (vgl. z.B. die eingangs genannte US-A-Schrift).

Die allgemein mit 2 bezeichnete Einrichtung umfasst ein feststehendes, auf Raumtemperatur befindliches Außengehäuse 3 mit einer Ständerwicklung 4. Innerhalb des Außengehäuses und von der Ständerwicklung 4 umschlossen ist ein Rotor 5 drehbar um eine Rotationsachse A in Lagern 6 gelagert, der auf einer Seite einen in dem entsprechenden Lager gelagerten, massiven axialen Rotorwellenteil 5a umfasst. Bei den Lagern 6 kann es sich um konventionelle mechanische Lager oder auch um Magnetlager handeln. Der Rotor weist ein Vakuumgefäß 7 auf, in dem an z.B. hohlzylindrischen, Drehmoment übertragenden Aufhängeelementen 8 ein Wicklungsträger 9 mit einer HTS-Wicklung 10 gehaltert ist. In diesem Wicklungsträger ist konzentrisch zur Rotationsachse A ein sich in Achsrichtung erstreckender, zylindrischer Hohlraum vorhanden, der nachfolgend als zentraler Hohlraum 12 bezeichnet ist. Der Wicklungsträger ist dabei vakuumdicht gegenüber diesem Hohlraum ausgeführt. Er schließt diesen auf der dem Rotorwellenteil 5a zugewandten Seite ab. Auf der anderen Seite ist der zentrale Hohlraum 12 an einen seitlichen Hohlraum 13 mit vergleichsweise kleinerem Durchmesser angeschlossen. Dieser seitliche Hohlraum führt von dem Bereich des Wicklungsträgers nach außen aus dem Bereich des Außengehäuses 3 hinaus. Ein diesen seitlichen Hohlraum 13 umschließender, in einem der Lager 6 gelagerter, rohrförmiger Rotorwellenteil ist mit 5b bezeichnet.

Die Supraleitungseinrichtung 2 weist zu einer indirekten Kühlung ihrer Wicklung 10 über wärmeleitende Elemente ferner eine Kälteeinheit auf, von der lediglich ein Kaltkopf 16 dargestellt ist. Bei der Kälteeinheit kann es sich insbesondere um einem Kryokühler vom Typ Gifford-McMahon handeln. Vorzugsweise wird als ein regenerativer Kryokühler ein Pulsröhrenkühler oder Split-Stirling-Kühler gewählt. Dabei soll sich der Kaltkopf 16 und damit alle wesentlichen, weiteren Teile der Kälteeinheit außerhalb des Rotors 5 und des Außengehäuses 3 befinden. Für die zu verwendende Kälteeinheit mit dem Kaltkopf erforderliche Zusatzteile wie z.B. warme Druckausgleichsbehälter, Füllkapillaren, Überdruckventile zur Absicherung des Systems gegen Überdruck bei Aufwärmen sind in der Figur nicht dargestellt, jedoch allgemein bekannt. Das Kaltteil des beispielsweise 0,5 bis etliche Meter seitlich von dem Rotor 5 angeordneten Kaltkopfes 16 steht in einem Vakuumgefäß 23 über einen Wärmeübertragungskörper 17 in gutem thermischen Kontakt mit einer Kältemittelkondensatoreinheit bzw. -kondensationseinheit 18. An diese Kondensatoreinheit ist ein vakuumisoliertes, ortsfestes Wärmerohr 20 angeschlossen, das seitlich in einem axialen Bereich in den seitlichen, mitrotierenden Hohlraum 13 hinein ragt. Zur Abdichtung des Wärmerohres 20 gegenüber dem seitlichen Hohlraum 13 dient eine in der Figur nicht näher ausgeführte Dichtungseinrichtung 21 mit mindestens einem Dichtungselement, die als eine Ferrofluiddichtung und/oder eine Labyrinthdichtung und/oder eine Spaltdichtung ausgebildet sein kann. Über das Wärmerohr 20 und den seitlichen Hohlraum 13 ist der zentrale Hohlraum 12 mit dem Wärmetauschbereich der Kondensatoreinheit 18 gasdicht nach außen abgedichtet verbunden. Ein in diesen Räumen eingeschlossenes Kältemittel wird in einem Kreisprozess an der von dem Kaltkopf 16 gekühlten Kondensatoreinheit unter Wärmeabgabe kondensiert. Anschließend fließt das so verflüssigte, mit k bezeichnete und in der Figur durch eine verstärkte Linie angedeutete Kondensat dann durch das Wärmerohr 20 zunächst in den seitlichen Hohlraum 13 und von dort in den zentralen Hohlraum 12. Der Transport des Kondensats durch das Wärmerohr geschieht dabei mittels einer Thermosyphon-Wirkung unter Einfluss der Schwerkraft und/oder einer Kapillarkraft der Innenwand des Wärmerohres, das als ein "Docht" funktioniert. Die Funktion eines solches Dochtes kann durch passende Ausgestaltung wie mit Hilfe von Längsrippen oder Kanälen zur Vergrößerung der Oberfläche oder durch Auskleidung der Innenwand optimiert werden. An dem in den seitlichen Hohlraum 13 hinein ragenden Ende 20a des Wärmerohres 20 tropft dann das Kondensat k in den Hohlraum 13 bzw. 12, wobei dieser Prozess durch Ausformung einer Tropfkante an dem Ende 20a des Rohres verstärkt werden kann. Desgleichen kann die Ausformung auch so gestaltet werden, dass durch eine Gasbewegung im rotierenden Innenraum auf Grund eines Windes des gasförmigen Teils des Kältemittels unter Rotation das Abtropfen unterstützt wird.

Im Inneren des Rotors wird dann das flüssige Kältemittel bzw. Kondensat k verdampft. Das dampfförmige Kältemittel ist mit k' bezeichnet. Zum Transport des Kältemittels kann eventuell noch die Schwerkraft oder Fliehkraft ausgenutzt werden, wenn der Transportweg des Kältemittels gegen die Rotationsachse nach außen zeigend geneigt ist. Hierzu ist der seitliche Hohlraum 13 als ein sich in Richtung auf den zentralen Hohlraum 12 bezüglich seines Durchmessers erweiterndes Rohr gestaltet. Das unter Aufnahme von Wärme verdampfte Kältemittel k' strömt dann durch das Innere des Wärmerohres 20 zurück in die Kondensatoreinheit 18. Hierbei wird der Rückstrom durch einen leichten Überdruck im als Verdampfer wirkenden Hohlraum 12 relativ zu der Kondensatoreinheit getrieben, der durch das Entstehen von Gas im Verdampfer und das Verflüssigen in der Kondensatoreinheit verursacht wird.

Als Kältemittel kommt z.B. Wasserstoff (Siedetemperatur 20,4 K bei Normaldruck, Trippelpunkt bei 14 K, kritischer Punkt bei 30 K und 8 bar), Neon (Siedetemperatur 20,1 K bei Normaldruck, Trippelpunkt bei 25 K, kritischer Punkt bei 42 K und 20 bar), Stickstoff (Siedetemperatur 77,4 K bei Normaldruck, Trippelpunkt bei 65 K, kritischer Punkt bei 125 K und 32 bar), Argon (Siedetemperatur 87,3 K bei Normaldruck, Trippelpunkt bei 85 K, kritischer Punkt bei 145 K und 39 bar) oder auch eine Mischung mehrerer dieser Stoffe zum Einsatz. Bei Mischungen wie z.B. Stickstoff mit Sauerstoff oder auch mit Methan lassen sich leicht auch Zwischentemperaturen realisieren.

Bei der erfindungsgemäßen Supraleitungseinrichtung wird also ein Wärmerohr vorgesehen, das stationär an eine Kältemaschine gekoppelt ist. Hierbei ist eine Übertragung des Kältemittels in den kryogenen Bereich vorgesehen, wobei der Übergang zwischen feststehenden und rotierenden Teilen durch abtropfende Flüssigkeit und der Rückweg durch strömendes Gas erfolgt.

Der Wicklungskörper 9 soll hinreichend wärmeleitend ausgeführt sein; d.h., er weist gut wärmeleitende Teile zwischen seiner Wand zum zentralen Hohlraum 12 und der Wicklung 10 auf. Auf diese Weise ist die Wicklung über den Wicklungskörper 9, das Kältemittel k und k', die Kondensatoreinheit 18 und den Wärmeübertragungskörper 17 auf einfache Weise thermisch an den Kaltkopf 16 der Kälteeinheit angekoppelt. Zur Verbesserung des Wärmeübertrags können gegebenenfalls die Wärmeaustauschflächen bezüglich des gasförmigen Kältemittels k' vergrößernde Maßnahmen, beispielsweise eine Rippung in Umfangsrichtung an der Wicklungsträgerwand des zentralen Hohlraums 12, vorgesehen sein.

Zu einer besseren Förderung der flüssigen Phase des Kältemittels k innerhalb des Wärmerohres 20 kann dieses noch in an sich bekannter Weise mit Einbauten in Form eines sogenannten "Dochtes", z.B. mit einem Edelstahldrahtschwamm oder eine durch Rillen vergrößerte Oberfläche, ausgestattet sein. Neben dem in der Figur dargestellten Transport der flüssigen Phase im horizontalen Teil des Wärmerohrs 20 ist selbstverständlich auch eine Förderung gegen die Schwerkraft möglich.

Selbstverständlich müssen die das Kältemittel k bzw. k' umschließenden Teile/Behältnisse gegen Wärmeeinleitung geschützt sein. Zu ihrer thermischen Isolation wird deshalb zweckmäßig eine Vakuumumgebung vorgesehen, wobei gegebenenfalls in den entsprechenden Vakuumräumen zusätzliche noch Isolationsmittel wie z.B. Superisolation oder Isolationsschaum vorgesehen werden können. In Figur 1 ist das von dem Vakuumgefäß 7 eingeschlossene Vakuum mit V bezeichnet. Es umgibt außerdem das den seitlichen Hohlraum 13 umschließende, sich bis zu der Dichtung 21 erstreckende Rohr. Das das Wärmerohr 20 sowie die Kondensatoreinrichtung 18 und den Wärmeübertragungskörper 17 umschließende Vakuum ist mit V' bezeichnet. Gegebenenfalls kann auch in dem den Rotor 5 umgebenden, von dem Außengehäuse 3 umschlossenen Raum 22 ein Unterdruck erzeugt werden.

Bei der in Figur 1 dargestellten Ausführung einer Supraleitungseinrichtung 2 mit Rotor 5 ist eine Einmalbefüllung mit gasförmigem Kältemittel k' vorgesehen. Sofern die Kälteeinheit abgeschaltet wird und sich die kalten Teile aufwärmen, wird der Druck im Rohr- bzw. Hohlraumsystem durch Verdampfen des Kältemittels ansteigen. Dabei hängt der Enddruck von den eingeschlossenen Volumina und der Menge des Kältemittels im System ab. Sofern z.B. Neon bei etwa 1 bar und 27 K und minimaler Flüssigkeitsmenge k als Kältemittel benutzt wird, ist davon auszugehen, dass nach einem Aufwärmen auf Raumtemperatur von etwa 300 K der Druck bei über 12 bar liegen wird. Da dieser Druck die rotierende Dichtung 21 belastet, kann es gegebenenfalls vorteilhaft sein, ein externes, warmes Puffervolumen vorzusehen. Sofern dieses Volumen PV das n-Fache des kalten Volumens des Kältemittels k, k' beträgt, kann der Druckanstieg im Warmen auf das 1:(n+1)-Fache auf diese Weise reduziert werden. Figur 2 zeigt eine entsprechende Ausbildung der Supraleitungseinrichtung nach Figur 1. Es sind dort bezeichnet mit 2' die gesamte Supraleitungseinrichtung, mit PV das Puffervolumen, mit 25 ein Füllventil, von dem aus das System über eine Füllkapillare 24 mit gasförmigem Kältemittel k' zu befüllen ist, sowie mit 26 ein Überdruckventil. Die übrigen Teile der Maschine entsprechen denen der Ausführungsform der Supraleitungseinrichtung 2 nach Figur 1.

## Patentansprüche

1. Supraleitungseinrichtung (2, 2')
- mit einem um eine Rotationsachse (A) drehbar gelagerten Rotor (5), der mindestens eine supraleitende Wicklung (10) aufweist, deren Leiter in einem wärmeleitend ausgeführten Wicklungsträger (9) angeordnet sind,
und
- mit einer Kälteeinheit, die mindestens einen thermisch über wärmeübertragende Teile an die Wicklung (10) angekoppelten Kaltkopf (16) aufweist,
**dadurch gekennzeichnet**,
a) dass der Wicklungsträger (9) mit einem zentralen, sich in Achsrichtung erstreckenden, zylindrischen Hohlraum (12) ausgestattet ist, an den ein aus dem Wicklungsträger (9) heraus führender seitlicher Hohlraum (13) angeschlossen ist,
b) dass sich der Kaltkopf (16) feststehend außerhalb des Rotors (5) befindet und thermisch mit einer Kondensatoreinheit (18) zur Kondensation eines Kältemittels (k, k') verbunden ist,
c) dass ein feststehendes Wärmerohr (20) an die Kondensatoreinheit (18) gekoppelt ist, das axial in den mitrotierenden seitlichen Hohlraum (13) hinein ragt und gegenüber diesem Raum abgedichtet ist
sowie
d) dass das Wärmerohr (20), der seitliche Hohlraum (13) und der zentrale Hohlraum (12) mit dem Kältemittel (k, k') gefüllt sind, wobei kondensiertes Kältemittel (k) über das Wärmerohr (20) in den seitlichen Hohlraum (13) und von dort in den zentralen Hohlraum (12) sowie dort verdampfendes Kältemittel (k') zurück über den seitlichen Hohlraum (13) und das Wärmerohr (20) zu der Kondensatoreinheit (18) gelangt.

2. Einrichtung nach Anspruch 1, **dadurch gekennzeichnet, dass** der zentrale Hohlraum (12) auf einer Seite durch den Wicklungsträger (9) abgeschlossen ist und der seitliche Hohlraum (13) an der dem Kaltkopf (18) zugewandten Seite durch eine Dichtungseinrichtung (21) mit mitrotierenden Teilen abgedichtet ist.

3. Einrichtung nach Anspruch 2, **dadurch gekennzeichnet, dass** die Dichtungseinrichtung (21) zumindest eine Dichtung aus der Gruppe Ferrofluiddichtung, Labyrinthdichtung, Spaltdichtung aufweist.

4. Einrichtung nach einem der vorangehenden Ansprüche, **dadurch gekennzeichnet, dass** die den Kaltkopf (16) umfassende Kälteeinheit mindestens einen insbesondere regenerativen Kryokühler aufweist.

5. Einrichtung nach Anspruch 4, **dadurch gekennzeichnet, dass** der Kryokühler ein Pulsröhrenkühler oder ein Split-Stirling-Kühler oder ein Gifford-McMahon-Kühler ist.

6. Einrichtung nach einem der vorangehenden Ansprüche, **gekennzeichnet durch** eine mehrstufige Ausbildung des Kaltkopfes.

7. Einrichtung nach Anspruch 6, **dadurch gekennzeichnet, dass** der Kaltkopf zwei Kältestufen aufweist, wobei die erste Stufe thermisch mit einer Stromzuführung oder einem Strahlungsschild und die zweite Stufe thermisch mit dem Kondensator (18) verbunden sind.

8. Einrichtung nach einem der vorangehenden Ansprüche, **dadurch gekennzeichnet, dass** die supraleitende Wicklung (10) mittels des Kaltkopfes (16) auf einer Temperatur unter 77 K zu halten ist.

9. Einrichtung nach einem der vorangehenden Ansprüche, **dadurch gekennzeichnet, dass** die Leiter der Wicklung (10) metallisches Niedrig-T_{c}-Supraleitermaterial oder metalloxidisches Hoch-T_{c}-Supraleitermaterial enthalten.

10. Einrichtung nach einem der vorangehenden Ansprüche, **dadurch gekennzeichnet, dass** das Wärmerohr (20) an seinem in den seitlichen Hohlraum (13) hinein ragenden Ende (20a) als Tropfkante ausgebildet ist.

11. Einrichtung nach einem der vorangehenden Ansprüche, **dadurch gekennzeichnet, dass** der seitliche Hohlraum (13) sich in Richtung auf den zentralen Hohlraum (12) erweiternd ausgebildet ist.

12. Einrichtung nach einem der vorangehenden Ansprüche, **gekennzeichnet durch** einen Kältemittelfluss auf Grund einer Thermosyphon-Wirkung und/oder Heat-Pipe-Wirkung.

13. Einrichtung nach einem der vorangehenden Ansprüche, **dadurch gekennzeichnet, dass** zumindest die kalten Teile des Rotors (5) und das Wärmerohr (20) vakuumisoliert sind.

## Claims

1. Superconducting device (2, 2')
- having a rotor (5) which is mounted such that it can rotate about a rotation axis (A) and has at least one superconducting winding (10), whose conductors are arranged in a winding mount (9) which is designed to be thermally conductive, and
having a refrigeration unit which has at least one cold head (16) which is thermally coupled to the winding (10) via parts which conduct heat,
characterized
a) in that the winding mount (9) is equipped with a central, cylindrical cavity (12) which extends in the axial direction and to which a lateral cavity (13) is connected which leads out of the winding mount (9),
b) in that the cold head (16) is located in a fixed manner outside the rotor (5) and is thermally connected to a condenser unit (18) for condensation of a refrigerant (k, k'),
(c) in that a stationary heat pipe (20) is coupled to the condenser unit (18), which pipe projects axially into the corotating lateral cavity (13) and seals off this area,
and
(d) in that the heat pipe (20), the lateral cavity (13) and the central cavity (12) are filled with coolant (k, k'), with condensed refrigerant (k) being passed via the heat pipe (20) into the lateral cavity (13) and from there into the central cavity (12), and refrigerant (k' ) which is vaporized there being passed back via the lateral cavity (13) and the heat pipe (20) to the condenser unit (18).

2. Device according to Claim 1, **characterized in that** the central cavity (12) is closed on one side by the winding mount (9), and the lateral cavity (13) is sealed on the side facing the cold head (16) by a sealing device (21) with parts which also rotate.

3. Device according to Claim 2, **characterized in that** the sealing device (21) has at least one seal from the group of ferro fluid seals, labyrinth seals, gap seals.

4. Device according to one of the preceding claims, **characterized in that** the refrigeration unit which has the cold head (16) has at least one in particular regenerative cryogenic cooler.

5. Device according to Claim 4, **characterized in that** the cryogenic cooler is a pulse tube cooler or a split Stirling cooler or a Gifford-McMahon cooler.

6. Device according to one of the preceding claims, **characterized by** a multistage configuration of the cold head.

7. Device according to Claim 6, **characterized in that** the cold head has two refrigeration stages, with the first stage being thermally connected to an electricity supply or to a radiation shield, and the second stage being thermally connected to the condenser (18).

8. Device according to one of the preceding claims, **characterized in that** the superconducting winding (10) can be kept at a temperature of below 77 K by means of the cold head (16).

9. Device according to one of the preceding claims, **characterized in that** the conductors of the winding (10) contain metallic low-T_{c} superconductor material or metal-oxide high-T_{c} superconductor material.

10. Device according to one of the preceding claims, **characterized in that** the heat pipe (20) is in the form of a dripping edge at its end (20a) which projects into the lateral cavity (13).

11. Device according to one of the preceding claims, **characterized in that** the lateral cavity (13) widens in the direction of the central cavity (12).

12. Device according to one of the preceding claims, **characterized by** a refrigerant flow on the basis of a thermosyphon effect and/or a heat pipe effect.

13. Device according to one of the preceding claims, **characterized in that** at least the cold parts of the rotor (5) and the heat pipe (20) are vacuum-insulated.

## Revendications

1. Dispositif (2, 2') supraconducteur
- comprenant un rotor (5) qui est monté tournant par rapport à un axe (A) de révolution et qui a au moins un enroulement (10) supraconducteur dont les conducteurs sont disposés dans un support (9) d'enroulement réalisé conducteur de la chaleur,
et
- comprenant une unité frigorifique qui a au moins une tête (16) froide couplée thermiquement à l'enroulement (10) par des parties caloporteuses,
caractérisé
a) en ce que le support (9) d'enroulement est muni d'une cavité (12) centrale cylindrique s'étendant dans la direction de l'axe et à laquelle est raccordée une cavité (13) latérale menant hors du support (9) d'enroulement,
b) en ce que la tête (16) froide se trouve de manière fixe à l'extérieur du rotor (5) et est reliée thermiquement à une unité (18) de condenseur pour la condensation d'un fluide (k, k') frigorigène,
c) en ce qu'un tube (20) caloporteur fixe est couplé à l'unité (18) de condenseur, pénètre axialement dans la cavité (13) latérale entraînée en rotation et est rendue étanche par rapport à cette cavité,
ainsi que
d) en ce que le tube (20) caloporteur, la cavité (13) latérale et la cavité (12) centrale sont emplis du fluide (k, k') frigorigène, du fluide (k) frigorigène condensé parvenant par le tube (20) caloporteur à la cavité (13) latérale et de là à la cavité (12) centrale, tandis que du fluide (k') frigorigène s'y évaporant retourne par la cavité (13) latérale et le tube (20) caloporteur à l'unité (18) de condenseur.

2. Dispositif suivant la revendication 1, **caractérisé en ce que** la cavité (12) centrale est fermée d'un côté par le support (9) d'enroulement et la cavité (13) latérale est rendue étanche du côté tourné vers la tête (18) froide par un dispositif (21) d'étanchéité ayant des parties entraînées en rotation.

3. Dispositif suivant la revendication 2, **caractérisé en ce que** le dispositif (21) d'étanchéité a au moins une étanchéité choisie dans le groupe d'une étanchéité par ferrofluide, d'une étanchéité en labyrinthe et d'une étanchéité à boîte à labyrinthe.

4. Dispositif suivant l'une des revendications précédentes, **caractérisé en ce que** l'unité frigorifique comprenant la tête (16) froide a au moins un refroidisseur cryogénique, notamment régénératif.

5. Dispositif suivant la revendication 4, **caractérisé en ce que** le refroidisseur cryogénique est un refroidisseur à tube pulsé ou un refroidisseur Split-Stirling ou un refroidisseur Gifford-MacMahon.

6. Dispositif suivant l'une des revendications précédentes, **caractérisé par** une constitution en plusieurs étages de la tête froide.

7. Dispositif suivant la revendication 6, **caractérisé en ce que** la tête froide a deux étages frigorifiques, le premier étage étant relié thermiquement à une entrée de courant ou à un bouclier vis-à-vis du rayonnement et le deuxième étage étant relié thermiquement au condenseur (18).

8. Dispositif suivant l'une des revendications précédentes, **caractérisé en ce que** l'enroulement (10) supraconducteur peut être maintenu au moyen de la tête (16) froide à une température inférieure à 77 K.

9. Dispositif suivant l'une des revendications précédentes, **caractérisé en ce que** les conducteurs de l'enroulement (10) contiennent de la matière supraconductrice métallique à T_{c} basse ou de la matière supraconductrice en oxyde métallique à T_{c} haute.

10. Dispositif suivant l'une des revendications précédentes, **caractérisé en ce que** le tube (20) caloporteur est constitué en bord de goutte à goutte à son extrémité (20a) pénétrant dans la cavité (13) latérale.

11. Dispositif suivant l'une des revendications précédentes, **caractérisé en ce que** la cavité (13) latérale s'évase en direction de la cavité (12) centrale.

12. Dispositif suivant l'une des revendications précédentes, **caractérisé par** un flux de fluide frigorigène en raison d'un effet de thermosyphon et/ou d'un effet de heat-pipe.

13. Dispositif suivant l'une des revendications précédentes, **caractérisé en ce qu'**au moins les parties froides du rotor (5) et du tube (20) caloporteur sont isolées par le vide.
